# EUROPEAN PATENT APPLICATION

(11) **EP 1 801 359 A2**
(43) Date of publication of application: **27.06.2007**
(21) Application number: 06026606.1
(22) Date of filing: 21.12.2006
(51) Int. Cl.: F01D 11/02, F16J 15/32

(54) **Reduced leakage finger seal**

(30) Priority: 22.12.2005 US 317512
(71) Applicant: UNITED TECHNOLOGIES CORPORATION, Hartford CT 06101 (US)
(72) Inventor: Martin, Keegan, Ashford, CT 06278 (US); Gehrkens, Peter, Middlebury, CT 06762 (US); Kehret, Debora, Manchester, CT 06040 (US)
(74) Representative: Klunker . Schmitt-Nilson . Hirsch

(57) **Abstract**

A multi-ply finger seal including a first detail having one or more first relief slots, a second detail having one or more second relief slots, and an intermediate layer positioned between the first detail and the second detail. The intermediate layer obstructs air from passing through the one or more first relief slots and the one or more second relief slots. The intermediate layer is substantially impermeable to air.

## Description

### BACKGROUND OF THE INVENTION

### GOVERNMENT RIGHTS IN THE INVENTION

The invention was made by or under contract with the United States Navy under contract number N00019-02-C-3003.

### 1. Field of the Invention

This invention relates generally to seals and, more particularly, to a multi-ply finger seal.

### 2. Description of the Related Art

Currently, convergent/divergent exhaust nozzles for gas turbine engines are utilized on jet and turbo jet engines. Changing a throat configuration of the nozzle is done in order to improve engine performance during certain modes of operation. The exhaust nozzle may have a sync ring enclosed by a static structure having bleed holes therein. A seal may block air in a sync ring cavity formed between the sync ring and the static structure to seal air in the pressurized cavity. Bleed holes on a back portion of the static structure inside the sync ring cavity can provide pressurized air to overcome nozzle core pressure and move the sync ring in an aft direction.

A typical seal has two layers or details each having relief slots. Relief slots are one or more apertures in the details of the seal so the details may conform to a curved or arc shape of the sync ring while preventing material of the details from deforming. Generally, a first detail is positioned on a second detail so that the relief slots of the first detail are offset in relation to the relief slots of the second detail. Air from the sync ring cavity may move through relief slots of the first detail, between the first and second details, and through the relief slots of the second detail into an ambient nozzle cavity. As a result of the pressurized air of the sync ring cavity bleeding into the ambient nozzle cavity, there is a reduction in engine performance, thrust, and fuel efficiency.

Accordingly, there is a need for an improved finger seal to reduce or eliminate pressurized sync ring cavity air from bleeding into an ambient nozzle cavity.

### SUMMARY OF THE INVENTION

A multi-ply finger seal including a first detail having one or more first relief slots, a second detail having one or more second relief slots, and an intermediate layer positioned between the first detail and the second detail is provided. The intermediate layer obstructs air from passing through the one or more first relief slots and the one or more second relief slots. The intermediate layer is substantially impermeable to air.

An exhaust nozzle for a gas turbine including a sync ring, at least two multi-ply finger seals adjacent the sync ring, and a static structure adjacent the at least two multi-ply finger seals on a side of the at least two multi-ply finger seals opposite to the sync ring is also provided. Each of the at least two multi-ply finger seals have a first detail, an intermediate layer adjacent the first detail, and a second detail adjacent the intermediate layer. The first detail has one or more first relief slots. The second detail has one or more second relief slots. The intermediate layer obstructs air from passing through the one or more first relief slots and the one or more second relief slots. The intermediate layer is substantially impermeable to air.

The intermediate layer may be foil or solid sheet stock. The intermediate layer may have a thickness of about 0.001 inches to about 0.004 inches. The first detail and the second detail may be sheet stock. The first detail and the second detail may be sheet stock having a thickness of about 0.005 inches to about 0.030 inches. The first detail, the intermediate layer, and the second detail may be connected by a connector selected from a group consisting essentially of mechanical lock, friction fit, adhesive, welding, riveted joint, and any combination thereof. The first layer may have one or more first holes, the intermediate layer may have one or more intermediate holes, and the second layer may have one or more second holes. The one or more first holes, the one or more intermediate holes, and the one or more second holes may be substantially aligned. The one or more first relief slots and the one or more second relief slots can be offset from each other. The multi-ply finger seal assembly may selectively move with any degree of freedom. The multi-ply finger seal may maintain a static position.

The first detail, the intermediate layer, and the second detail may be locked together along a curve at a first end of each of the at least two multi-ply finger seals by a connector selected from a group consisting essentially of mechanical lock, friction fit, adhesive, welding, riveted joint, and any combination thereof. The static structure can be adjacent to the curve of each of the at least two multi-ply finger seals. The plurality of first holes, the plurality of intermediate holes, and the plurality of second holes may be on a second end of each of the at least two multi-ply finger seals. Each of the at least two multi-ply finger seals can be connected to the sync ring by one or more rivets through the plurality of first holes, plurality of intermediate holes, and the plurality of second holes. The at least two multi-ply finger seals, the sync ring, and the static structure can form a sync ring cavity. The intermediate layer may impede pressurized air in the sync ring cavity from passing through the at least two multi-ply finger seals. The static structure may have one or more bleed holes. The first detail, the second detail, and the intermediate layer may be riveted to the sync ring. The sync ring may translate axially forward and aft in a static structure cavity when the multi-ply finger seal contacts on a static structure

The above-described and other features and advantages of the present disclosure will be appreciated and understood by those skilled in the art from the following detailed description, drawings, and appended claims.

### BRIEF DESCRIPTION OF THE DRAWINGS

Figure 1 is a top perspective view of a portion of a seal assembly of the present invention;

Figure 2 is a cross sectional side view of a portion of the seal assembly of the present invention along line A-A of Fig. 1; and

Figure 3 is a side cross-sectional view of a sync ring and a static structure having seal assemblies of the present invention.

### DETAILED DESCRIPTION OF THE INVENTION

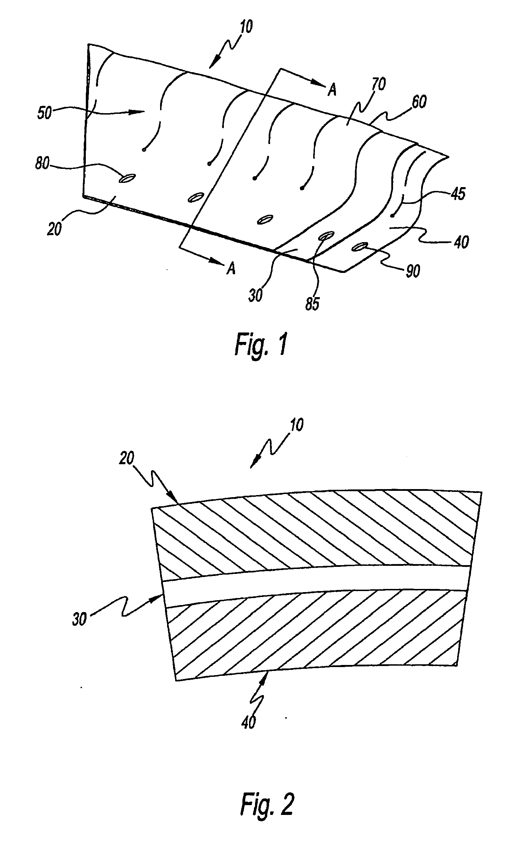

Referring now to FIGS. 1 and 2, an exemplary embodiment of a portion of a seal assembly generally referred to by reference numeral 10 is illustrated. Seal assembly 10 has a multi-ply design including an outer detail 20, an intermediate layer 30, and an inner detail 40, as shown in Figure 2. Outer detail 20 has a plurality of outer relief slots 50. Inner detail 40 has a plurality of inner relief slots 45 similar to outer relief slots 50. Inner relief slots 45 and outer relief slots 50 permit inner and outer details 20 and 40 to conform to a curved or arc shape, such as, for example, a shape of a sync ring, while preventing material of inner and outer details 20 and 40 from deforming. Preferably, outer detail 20 is positioned with respect to inner detail 40 so that relief slots 50 of outer detail 20 are offset in relation to inner relief slots 45.

Outer detail 20, preferably, has one or more outer holes 80 and inner detail 40 has one or more inner holes 90. Preferably, inner holes 90 are equal in size to outer holes 80. Outer holes 80 may be aligned with inner holes 90, as shown in Figure 1.

Layer 30 is positioned intermediate outer detail 20 and inner detail 40. Outer detail 20, layer 30, and inner detail 40, preferably, are connected together, such as, for example, via mechanical lock, friction fit, adhesive, welding, riveted joint, and/or the like. Outer detail 20, layer 30, and inner detail 40, preferably, are connected together at an end 60 along a curve 70. However, outer detail 20, layer 30, and inner detail 40 may be in any geometry or take any shape.

Layer 30 acts as a barrier between outer relief slots 50 and inner relief slots 45. As a result, air is prevented from passing through seal assembly 10 by moving through relief slots 50, between outer and inner details 20 and 40, and through inner relief slots 45.

Seal assembly 10 may be used in any static or dynamic seal application. Seal assembly 10 may have any degree of freedom. For example, seal assembly 10 may move axially or radially with the sync ring. Alternatively, seal assembly 10 may maintain a static or fixed position.

Layer 30, preferably, has intermediate holes 85 substantially equal in size to outer holes 80 and inner holes 90. The intermediate holes 85, preferably, are aligned with outer holes 80 and inner holes 90. The intermediate holes 85, outer holes 80, and inner holes 90 can provide for attachment of seal assembly 10 by, such as, for example, rivets, to a surface, such as, for example, a surface of a sync ring.

Layer 30 is made from a thin malleable material, such as, for example, any foil or solid sheet stock. Layer 30, preferably, is bendable to conform to a shape, such as, for example, a curved surface of a sync ring without failing and/or deforming so that layer 30 is substantially impermeable to air. Layer 30 may have a thickness, preferably between about 0.001 inches to about 0.004 inches, more preferably, about 0.003 inches.

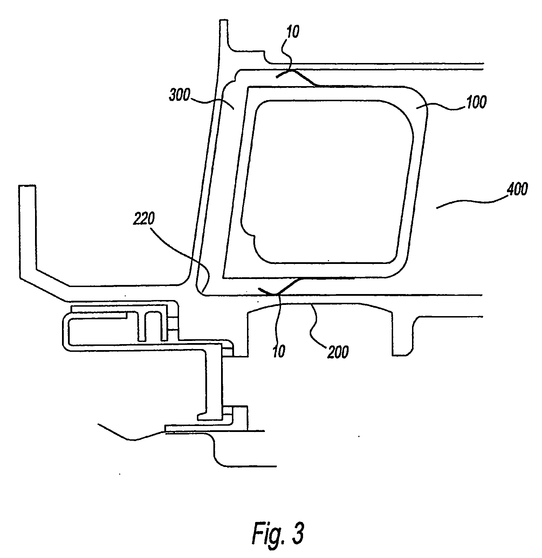

Referring to FIG. 3, a portion of a nozzle of a gas turbine is illustrated having a pair of seal assemblies 10. Seal assemblies 10 may be connected through the outer holes 80, intermediate holes 85, and inner holes 90 to a sync ring 100, preferably, via one or more rivets, more preferably, one rivet per set of one of the outer holes 80, one of the intermediate holes 85,and one of the inner holes 90. Each of seal assemblies 10 may have curve 70 that rests against a static structure 200 forming a sync ring cavity 300 on a first side of seal assemblies 10. On a second side of seal assemblies 10 opposite the first side, is a nozzle cavity 400.

Seal assemblies 10 seal pressurized air in sync ring cavity 300 formed between sync ring 100 and static structure 200. Bleed holes 220 located on static structure 200 can provide pressurized air to sync ring cavity 300. The pressurized air may apply a force to sync ring cavity 300 that may overcome pressures of the exhaust nozzle and move sync ring 100, for example, in an aft direction. Seal assembly 10 may move with any degree of freedom on sync ring 100, such as, for example, axially and/or radially.

There are three areas of potential leakage in the nozzle of FIG. 3. First, leakage is possible through a rivet joint between seal assemblies 10 and sync ring 100. Second, contact leakage may occur between seal assemblies 10 and static structure 200. Third, leakage through outer relief slots 50 and inner relief slots 45 is possible. Leakage occurring through relief slots is where a majority of leakage originates in prior seals or prior art seals. Seal assemblies 10 reduce leakage through the relief slots, specifically outer relief slots 50 and inner relief slots 45, dramatically over the prior art by use of layer 30. Layer 30 obstructs air in sync ring cavity 300 from passing through outer relief slots 50, moving between outer and inner details 20 and 40, and through inner relief slots 45 into ambient nozzle cavity 400. Thus, air leakage from pressurized sync ring cavity 100 to ambient nozzle cavity 400 is reduced or eliminated. A reduction in air leakage increases performance, thrust, and fuel efficiency of an engine.

While the exemplary embodiment is a multi-ply finger seal having outer and inner details 20, 40 with a layer 30 positioned therebetween, the present disclosure contemplates other numbers of details 20, 40 as well as other numbers of layers 30 to reduce or eliminate air leakage through the relief slots.

While the instant disclosure has been described with reference to one or more exemplary embodiments, it will be understood by those skilled in the art that various changes may be made and equivalents may be substituted for elements thereof without departing from the scope thereof. In addition, many modifications may be made to adapt a particular situation or material to the teachings of the disclosure without departing from the scope thereof. Therefore, it is intended that the disclosure not be limit1ed to the particular embodiment(s) disclosed as the best mode contemplated for carrying out this invention, but that the invention will include all embodiments falling within the scope of the appended claims.

## Claims

1. A multi-ply finger seal comprising:
a first detail having one or more first relief slots;
a second detail having one or more second relief slots; and
an intermediate layer positioned between said first detail and said second detail,
wherein said intermediate layer obstructs air from passing through said one or more first relief slots and said one or more second relief slots, and wherein said intermediate layer is substantially impermeable to air.

2. The multi-ply finger seal of claim 1, wherein said intermediate layer is foil or solid sheet stock.

3. The multi-ply finger seal of claim 1 or 2, wherein said intermediate layer has a thickness of about 0.001 inches to about 0.004 inches.

4. The multi-ply finger seal of any of claims 1 to 3, wherein said first detail and said second detail are sheet stock.

5. The multi-ply finger seal of any of claims 1 to 4, wherein said first detail and said second detail are sheet stock having a thickness of about 0.005 inches to about 0.030 inches.

6. The multi-ply finger seal of any of claims 1 to 5, wherein said first detail, said intermediate layer, and said second detail are connected by a connector selected from a group consisting essentially of mechanical lock, friction fit, adhesive, welding, riveted joint, and any combination thereof.

7. The multi-ply finger seal of any of claims 1 to 6, wherein said first layer has one or more first holes, wherein said intermediate layer has one or more intermediate holes, wherein said second layer has one or more second holes, and wherein said one or more first holes, said one or more intermediate holes, and said one or more second holes are substantially aligned.

8. The multi-ply finger seal of any of claims 1 to 7, wherein said one or more first relief slots and said one or more second relief slots are offset from each other.

9. The multi-ply finger seal of any of claims 1 to 8, wherein the multi-ply finger seal assembly selectively moves with any degree of freedom.

10. The multi-ply finger seal of any of claims 1 to 9, wherein the multi-ply finger seal maintains a static position.

11. An exhaust nozzle for a gas turbine, the exhaust nozzle comprising:
a sync ring;
at least two multi-ply finger seals adjacent said sync ring, each of said at least two multi-ply finger seals having a first detail, an intermediate layer adjacent said first detail, and a second detail adjacent said intermediate layer, said first detail having one or more first relief slots, and said second detail having one or more second relief slots; and
a static structure adjacent said at least two multi-ply finger seals on a side of said at least two multi-ply finger seals opposite to said sync ring,
wherein said intermediate layer obstructs air from passing through said one or more first relief slots and said one or more second relief slots, and wherein said intermediate layer is substantially impermeable to air.

12. The exhaust nozzle of claim 11, wherein said first detail, said intermediate layer, and said second detail are locked together along a curve at a first end of each of said at least two multi-ply finger seals by a connector selected from a group consisting essentially of mechanical lock, friction fit, adhesive, welding, riveted joint, and any combination thereof.

13. The exhaust nozzle of claim 12, wherein said static structure is adjacent to said curve of each of said at least two multi-ply finger seals.

14. The exhaust nozzle of any of claims 11 to 13, wherein said first layer has a plurality of first holes, wherein said intermediate layer has a plurality of intermediate holes, wherein said second layer has a plurality of second holes, and wherein said plurality of first holes, said plurality of intermediate holes, and said plurality of second holes are substantially aligned.

15. The exhaust nozzle of claim 14, wherein said plurality of first holes, said plurality of intermediate holes, and said plurality of second holes are on a second end of each of said at least two multi-ply finger seals, and wherein each of said at least two multi-ply finger seals is connected to said sync ring by one or more rivets through said plurality of first holes, said plurality of intermediate holes, and said plurality of second holes.

16. The exhaust nozzle of any of claims 11 to 15, wherein said at least two multi-ply finger seals, said sync ring, and said static structure form a sync ring cavity, and wherein said intermediate layer impedes pressurized air in said sync ring cavity from passing through said at least two multi-ply finger seals.

17. The exhaust nozzle of any of claims 11 to 16, wherein said static structure has one or more bleed holes.

18. The exhaust nozzle of any of claims 11 to 17, wherein said one or more first relief slots and said one or more second relief slots are offset from each other.

19. The exhaust nozzle of any of claims 11 to 18, wherein said intermediate layer is foil or solid sheet stock.

20. The exhaust nozzle of any of claims 11 to 19, wherein said first detail, said second detail, and said intermediate layer are riveted to said sync ring, and wherein said sync ring translates axially forward and aft in a static structure cavity when the multi-ply finger seal contacts on a static structure.
